# EUROPÄISCHE PATENTSCHRIFT

(11) **EP 2 107 977 B1**
(45) Veröffentlichungstag und Bekanntmachung des Hinweises auf die Patenterteilung: **04.05.2016**
(21) Anmeldenummer: 08700963.5
(22) Anmeldetag: 02.01.2008
(51) Int. Cl.: B60N 2/225

(54) **VERSTELLEINRICHTUNG FÜR EINEN FAHRZEUGSITZ**
ADJUSTMENT DEVICE FOR A VEHICLE SEAT
DISPOSITIF DE RÉGLAGE POUR UN SIÈGE DE VÉHICULE

(30) Priorität: 04.01.2007 DE 102007001617; 09.07.2007 WO PCT/US2007/073034; 17.08.2007 DE 102007039024
(43) Veröffentlichungstag der Anmeldung: 14.10.2009
(73) Patentinhaber: Johnson Controls GmbH, 51399 Burscheid (DE)
(72) Erfinder: KIENKE, Ingo, 42929 Wermelskirchen (DE); OTTO, Juergen, 51399 Burscheid (DE); BUDWEG, Mario, 42499 Hückeswagen (DE); KIRUBAHARAN, Albert, Reginold, 51399 Burscheid (DE)
(74) Vertreter: Wolff, Felix
(86) Internationale Anmeldenummer: PCT/EP2008/000005
(87) Internationale Veröffentlichungsnummer: WO 2008/080999

(56) Entgegenhaltungen:
- EP-A- 0 432 420
- DE-A1- 4 119 980

## Beschreibung

Die Erfindung betrifft eine Verstelleinrichtung für eine Fahrzeugkomponente, insbesondere für die Rückenlehne eines Fahrzeugsitzes, mit einem ersten Beschlagteil und einem zweiten Beschlagteil, wobei die relative Lage der beiden Beschlagteile zueinander mittels eines Exzenters veränderbar ist, der ein Drehmoment von einem Antrieb auf das erste Beschlagteil übertragt, so dass dieses an dem zweiten Schlagteil abrollt und wobei der Exzenter mindestens ein Exzentermittel umfasst, das von einem Mitnehmer, der an dem Antrieb angeordnet ist, antreibbar ist. Eine derartige Verstelleinrichtung ist aus der DE 41 19 980 A1 bekannt.

Eine weitere Verstelleinrichtung ist aus der WO 2006/040303 A2 bekannt, die jedoch vergleichsweise aufwendig gestaltet ist. Ein weiterer Stand der Technik ist DE 10 2004 039 538 A1.

Die in dieser Offenlegungsschrift offenbarte Verstelleinrichtung hat ein Freispiel, das jedoch nicht immer gewünscht bzw. nicht benötigt wird. Aus der deutschen Patentschrift DE 10 2004 011 268 B3 ein Neigungsverstellbeschlag für die Rückenlehne eines Kraftfahrzeugsitzes mit einem Taumelgetriebe bekannt. Ferner ist aus der deutschen Patentschrift DE 103 05 407 B4 ein Gelenkbeschlag für einen Fahrzeugsitz bekannt. Bei diesen bekannten Neigungsverstellern zeigen sich jedoch Schwächen bei einer kraftgetrieben Ausführung der Verstelleinrichtung, insbesondere Materialschwächungen bzw. Verschleißerhöhungen bei einem Alltagsbetrieb der Neigungsversteller.

Es war deshalb die Aufgabe der vorliegenden Erfindung eine einfach aufgebaute Verstelleinrichtung zur Verfügung zu stellen, die kein oder nur ein geringes Freispiel aufweist.

Gelöst wird diese Aufgabe mit einer Verstelleinrichtung nach Anspruch 1.

Die vorliegende Erfindung betrifft eine Verstelleinrichtung für eine Fahrzeugkomponente, insbesondere für eine Kraftfahrzeugkomponente. Vorzugsweise handelt es sich bei der Verstelleinrichtung um einen sogenannten Recliner, mit dem die Lage einer Rückenlehne eines Kraftfahrzeugsitzes relativ zu einem Sitzteil zur Erhöhung des Fahrkomforts und/oder zur Überführung der Lehne in eine Verstau- oder Liegestellung veränderbar ist. Besonders bevorzugt weist ein solcher Fahrzeugsitz rechts und links der Rückenlehne bzw. des Sitzteils eine derartige Verstelleinrichtung auf. Diese Verstelleinrichtungen sind dann vorzugsweise durch eine Welle miteinander verbunden. Bei dem Fahrzeugsitz kann es sich um einen Sitz für eine oder mehrere Personen handeln, so dass der Fahrzeugsitz gegebenenfalls auch eine Sitzbank ist, die vorzugsweise eine geteilte Rückenlehne aufweist.

Erfindungsgemäß weist die Verstelleinrichtung mindestens ein erstes Beschlagteil, das vorzugsweise mit der Rückenlehne des Kraftfahrzeugsitzes und mindestens ein zweites Beschlagteil, das vorzugsweise mit dem Sitzteil des Kraftfahrzeugsitz verbunden ist, auf, wobei die relative Lage der beiden Beschlagteile zueinander mittels eines Exzenters veränderbar ist. Bei der erfindungsgemäßen Verstelleinrichtung handelt es sich demnach um eine sogenannte Taumelverstelleinrichtung, deren prinzipielle Funktionsweise beispielsweise aus der WO 2006/040303 und der DE 10 2004 039 538 bekannt ist. Diese Druckschriften werden hiermit als Referenz eingeführt und gelten somit als Teil der Offenbarung. Der Exzenter überträgt dabei ein manuell oder motorisch erzeugtes Drehmoment auf das erste Beschlagteil, so dass sich dieses dreht und auf dem zweiten Beschlagteil abrollt. Vorzugsweise weist das erste Beschlagteil eine Außenverzahnung und das zweite Beschlagteil eine Innenverzahnung auf, die miteinander kämmen. Vorzugsweise weist die Außenverzahnung mindestens einen Zahn mehr auf, so dass das erste Beschlagteil in dem zweiten Beschlagteil taumeln kann.

Der Exzenter weist mindestens ein Exzentermittel, beispielsweise einen Keil, auf, der beispielsweise von einem mit einem rotatorischen Antrieb verbunden Mitnehmer angetrieben wird. Vorzugsweise ist der Mitnehmer an den Antrieb, beispielweise einen Antriebsbolzen angeformt. Dieser Mitnehmer löst das Exzentermittel zunächst aus seiner Feststellung und nimmt es dann mit, um das erste Beschlagteil zu drehen. Der Mittnehmer kann sich in zwei Stellungen, in einer Neutral- und in einer Antriebsstellung befinden. In der Neutralstellung ist er von dem Exzentermittel beabstandet, während er in der Antriebstellung an dem Exzentermittel anliegt. Er muss also erst ein gewisses Freispiel überwunden werden, bevor das Exzentermittel von dem Mitnehmer angetrieben wird.

Um dieses Freispiel zumindest zu vermindern und zu erreichen, dass die Verstelleinrichtung ein angelegtes Drehmoment möglichst unmittelbar in einer Lageänderung zwischen dem ersten und dem zweiten Beschlagteil resultiert, erfolgt beim Drehen des Antriebs zwischen dem ersten und dem zweiten ein Reibschluss; d.h. durch Reibung wird ein Drehmoment von dem Antrieb auf das Exzentermittel übertragen, die hinreichend groß ist, um das Exzentermittel aus seiner Feststellung zu lösen und so lange in Drehrichtung des Antriebs mitzunehmen, bis der Mittnehmer an dem Exzentermittel anliegt und dadurch die Antriebsfunktion übernimmt. Der Fachmann erkennt, dass der Antrieb auch vollständig über den Reibschluss erfolgen kann; d.h. dass in diesem Fall der Mitnehmer nicht vorhanden sein könnte oder zum Einsatz kommt.

Die erfindungsgemäße Verstelleinrichtung ist vergleichsweise einfach aufgebaut und einfach zu betreiben. Dadurch, dass ein gewisses Freispiel zwischen dem Mittnehmer und den Exzentermitteln zugelassen werden kann, ist es möglich die erfindungsgemäße Verstelleinrichtung mit gewissen Fertigungstoleranzen herzustellen, ohne auf eine unmittelbare Reaktion des Getriebes auf ein angelegtes Drehmoment zu verzichten. Die Verstelleinrichtung kann im und gegen den Uhrzeigersinn angetrieben werden.

Vorzugsweise handelt es sich bei dem Antrieb um ein zylindrisches Bauteil, beispielsweise einen Bolzen, mit einem Außenradius, der mit einem Innenradius des Exzentermittels zusammenwirkt. Besonders bevorzugt sind die Radien so unterschiedlich gestaltet, dass es zu einer punkt- oder linienförmigen Berührung zwischen dem Antrieb und dem Exzentermittel kommt. Durch die Berührung wird eine Reibkraft von dem Antrieb auf das Exzentermittel übertragen, so dass sich dieses mit dem Antrieb mitdreht.

Besonders bevorzugt weist der Innenradius jedes Exzentermittels zwei Radien auf, die nicht denselben Mittelpunkt haben. Der Übergansbereich zwischen den Radien wirkt mit dem Außenradius des Antriebs zusammen. Vorzugsweise kommt es bei einer Drehung des Antriebs relativ zu dem Exzentermittel zu deren punkt- bzw. linienförmigen Berührung, durch die die Reibkräfte übertragen werden.

Vorzugsweise sind die Geometrie des Antriebs und des Exzentermittels bzw. deren Lage zueinander so aufeinander abgestimmt, dass der Reibschluss mitnehmerfern d.h nicht in der Nähe des Mitnehmers erfolgt. Vorzugsweise wird die punkt- oder linienförmige Berührung des Antriebs und des Exzentermittels bei einer Teilung von 1:1,5 - 1:2,5, besonders bevorzugt 1:1,75 -1:2,25 des Radius angeordnet. Die Teilung ist das Kreisbogensegment des Exzenters gemessen von seinem dem Mitnehmer zugewandten Ende bis zur Berührungsstelle.

Vorzugsweise weist die erfindungsgemäße Verstelleinrichtung zwei Exzentermittel auf. Diese sind vorzugsweise spiegelsymmetrisch angeordnet und ausgebildet, wobei der Mitnehmer in der einen Drehrichtung mit dem einen Exzentermittel und in der anderen Drehrichtung mit dem anderen Exzentermittel zusammenwirkt.

Ansonsten gilt für beide Exzenternittel das oben gesagte gleichermaßen. Beide Exzenter werden von dem Antriebsmittel angetrieben unabhängig von dessen Drehrichtung.

Vorzugsweise ist zwischen den beiden Exzentermittel ein Federmittel angeordnet, dass diese auseinanderdrückt.

Vorzugsweise wirkt der Außenradius des oder der Exzentermittel(s) mit einer Lagerschale zusammen. Besonders bevorzugt ist diese Lagerpaarung möglichst reibungsarm ausgeführt.

Weiterhin bevorzugt ist der Antrieb, beispielsweise ein Antriebsbolzen, mit einer Buchse verbunden, vorzugsweise verschweißt.

In einer anderen bevorzugten Ausführungsform ist der Antrieb, beispielsweise ein Antriebsbolzen, in einer oder mehreren Lagerschalen gelagert.

Die erfindungsgemäße Verstelleinrichtung eignet sich insbesondere zur Neigungsverstellung der Rückenlehne eines Kraftfahrzeugsitzes. Ein weiterer Gegenstand der vorliegenden Erfindung ist deshalb ein Kraftfahrzeugsitz aufweisend die erfindungsgemäße Verstelleinrichtung.

Vorzugsweise ist eine derartige Verstelleinrichtung rechts und links der Rückenlehne bzw. des Fahrzeugsitzes angeordnet. Besonders bevorzugt sind diese Verstelleinrichtungen durch eine Welle miteinander verbunden, die ihrerseits manuell oder motorisch antreibbar ist.

Im folgenden werden die Erfindungen anhand der Figuren 1 - 14 erläutert. Diese Erläuterungen sind lediglich beispielhaft und schränken den allgemeinen Erfindungsgedanken nicht ein.
Figur 1 zeigt eine Explosionszeichnung der erfindungsgemäßen Verstelleinrichtung.
Figur 2 zeigt eine Prinzipdarstellung der erfindungsgemäßen Verstelleinrichtung.
Figur 3 zeigt eine Prinzipdarstellung einer Verstelleinrichtung gemäß dem Stand der Technik.
Figur 4 zeigt eine Ausführungsform der erfindungsgemäßen Verstelleinrichtung.
Figur 5 zeigt eine weitere Ausführungsform der der erfindungsgemäßen Verstelleinrichtung.
Figur 6 zeigt eine zusätzliche Ausführungsform der erfindungsgemäßen Verstelleinrichtung.
Figur 7 zeigt die Hauptkomponenten für einen elektromotorischen Antrieb der erfindungsge mäßen Verstelleinrichtung.
Figur 8 zeigt einen Teil der erfindungsgemäßen Verstelleinrichtung.
Figur 9 zeigt eine Schnittdarstellung durch zwei Ausführungsvarianten der erfindungsgemäßen Verstelleinrichtung.
Figur 10 zeigt eine perspektivische Darstellung einer teilweise montierten erfindungsgemäßen Verstelleinrichtung.
Figur 11 zeigt eine perspektivische Darstellung einer montierten erfindungsgemäßen Verstelleinrichtung.
Figur 12 zeigt eine perspektivische Darstellung einer montierten ^ erfindungsgemäßen Verstelleinrichtung.
Figur 13 zeigt eine schematische Darstellung eines Fahrzeugsitzes mit einer erfindungsgemäßen Verstelleinrichtung.
Figur 14 zeigt eine Schnittdarstellung durch zwei Ausführungsvarianten der erfindungsgemäßen Verstelleinrichtung.

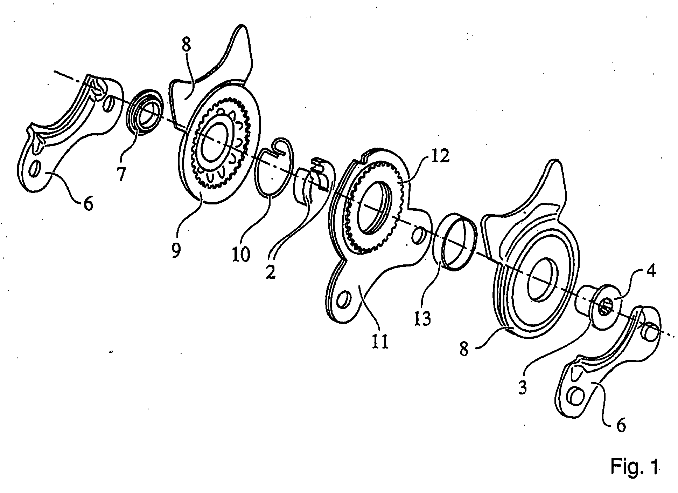

Figur 1 zeigt eine Explosionszeichnung einer Ausführungsform der erfindungsgemäßen Verstelleinrichtung. Diese Verstelleinrichtung weist einen Lehnenadapter 8 sowie einen Sitzadapter 11 auf. Mit den Halteplatten 6 wird der Sitzadapter 11 an dem Fahrzeugsitz befestigt, hier verschraubt. Der Lehnenadapter 8 wird mit der Rückenlehne des Fahrzeugsitzes verbunden, vorzugsweise verschweißt. Der Fachmann erkennt, dass diese Funktionalitäten der beiden Adapter 8, 11 auch vertauscht sein können. Die relative Lage des Lehnenadapters 8 relativ zum Sitzadapter 11 wird mittels eines Exzenters 1 bestimmt, der zwei Keile 2 aufweist. Diese beiden Keile 2 sind bevorzugt symmetrisch und besonders bevorzugt spiegelsymmetrisch zu einer durch die Drehachse D verlaufenden Geraden angeordnet. Die beiden Keile werden mit einem Kraftspeicher, hier einer Feder 10, vorzugsweise einer Ringfeder, deren Enden in Kerben in den Keilen 2 eingreifen, auseinandergedrückt. Der Kraftspeicher 10 ist Teil des Exzenters. Außerdem sind die Keile 2 zumindest teilweise in einer Lagerschale 13 angeordnet und stützen sich an dieser ab. Durch die Lagerschale 13 kann die Reibung zwischen dem Exzenter und dem Sitzadapter 11 reduziert und ein gleichmäßiger Rundlauf des Exzenters erzielt werden. Des weiteren weist die erfindungsgemäße Vorrichtung einen Antriebsbolzen 4 auf, der manuell oder motorisch angetrieben wird. Dieser Antriebsbolzen 4 überträgt seine Drehbewegung, wie weiter unten näher beschrieben wird, auf den Exzenter 1, so dass beim Drehen des Antriebes 4 der außenverzahnte Sitzadapter 11 in dem innenverzahnten Lehnenadapter 8 abrollt. Der Antriebsbolzen 4 ist mit einer Hülse 7 verbunden, vorzugsweise verschweißt.

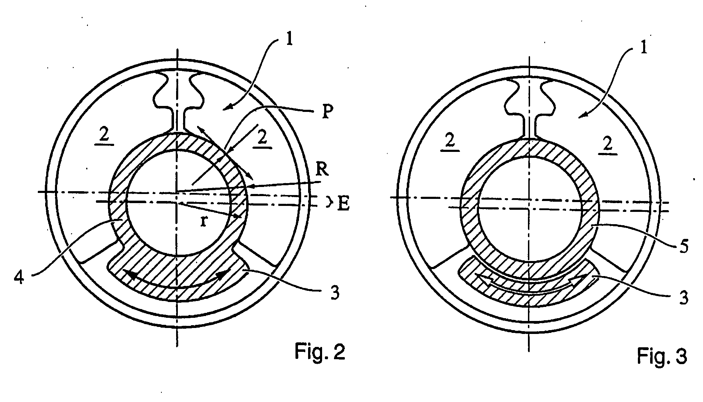

In Figur 2 ist der Exzenter 1 der erfindungsgemäßen Vorrichtung dargestellt. Der Exzenter dient, wie bereits erwähnt, zum Antrieb des außenverzahnten inneren Zahnrades innerhalb eines innenverzahnten, mindestens einen Zahn mehr aufweisenden äußeren Zahnrades. Es handelt sich demnach um ein sogenanntes Taumelgetriebe. Der Exzenter wird durch Keile 2 gebildet, die zur Kompensation von Tangentialspiel im Taumelgetriebe von einer hier nicht dargestellten Feder 10 auseinandergedrückt werden. Der Antrieb der Keile 2 in die eine oder entgegengesetzte Drehrichtung erfolgt zumindest zeitweise durch einen Mitnehmer 3, der an dem Antriebsbolzen 4 angeformt ist.

Bei einem vorbekannten, manuell betätigten Taumelgetriebe, wie es beispielsweise in Figur 3 dargestellt ist, liegen die Keile 2 an einem stationären, also nicht drehenden Bolzen 5 an und werden ausschließlich durch den unmittelbaren Kontakt des Mitnehmers 3 mit dem in Drehrichtung nächstliegenden Keil 2 angetrieben. Aus der Neutralstellung heraus muss der Antriebsbolzen 4 also zuerst ein gewisses Freispiel überwinden, bis der Mitnehmer 3 am betreffenden Keil 2 anliegt. Dieses Freispiel ist wünschenswert, um Fertigungstoleranzen zu kompensieren und damit das Antriebsmoment gering zu halten.

Bei einem erfindungsgemäßen insbesondere motorischen Antrieb ist hingegen eine unmittelbare Reaktion des Getriebes wünschenswert. Erfindungsgemäß ist daher vorgesehen, bereits vor dem Kontakt des Keils 2 mit dem Mitnehmer 3 durch Reibung ein Moment vom drehenden Antriebsbolzen 4 auf den betreffenden Keil 2 auszuüben. Die bogenförmig ausgebildeten Keile 2 weisen daher einen inneren Bogenradius R auf, welcher größer ist als der Außenradius r des Antriebsbolzens 4. Etwa im Bereich einer mitnehmerfernen 1:2 Teilung des inneren Bogens des mitnehmernahen Keils 2 bildet sich ein Kontaktpunkt P bzw, eine Kontaktlinie aus, über den der zugeordnete (hier der rechte) Keil 2 bereits vor dem Kontakt mit dem Mitnehmer 3 aus seiner Klemmung gelöst und in Drehrichtung des Antriebsbolzens 4 verlagert wird. Der Exenter 1 bewirkt eine Taumelbewegung zwischen den beiden Beschlagteilen 8, 11. Die Keile 2 dienen jedoch nicht nur als Antriebsübertragungsmittel sondern dazu den Exzenter im nichtangetrieben Zustand in seiner jeweiligen Stellung zu blockieren für den Fall, dass ein Drehmoment von dem innenverzahnten Zahnrad 9 auf das außenverzahnte Zahnrad 12 übertragen wird; d.h. dass beispielsweise bei einem Unfall ein Drehmoment von der Rückenlehne auf den Exzenter 1 übertragen wird.

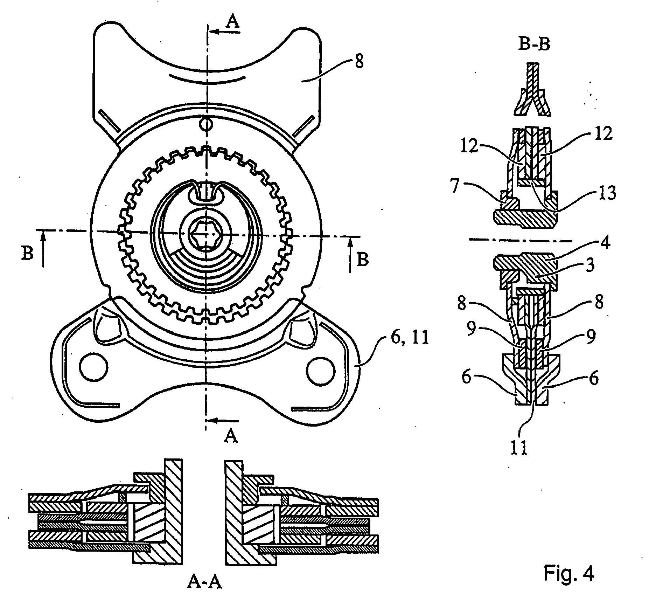

Die Figur 4 zeigen einen ersten Aufbau einer erfindungsgemäßen Verstelleinrichtung. Die wesentliche Teile des Mechanismus sind die sitzteilseitigen Halteplatten 6, eine Buchse 7, der Lehnenadapter 8 mit innenverzahntem Zahnrad 9, die Feder 10, welche die Keile 2 spreizt, der Sitzteiladapter 11 mit den außenverzahnten Zahnrädern 12, die Lagerschale 13 und der Antriebsbolzen 4 mit dem angeformten Mitnehmer 3. Die Buchse 7 dreht sich in diesem Fall gemeinsam mit dem mit einem Kragen versehenen Antriebsbolzen 4, mit dem sie zum Beispiel durch Schweißen drehfest verbunden ist.

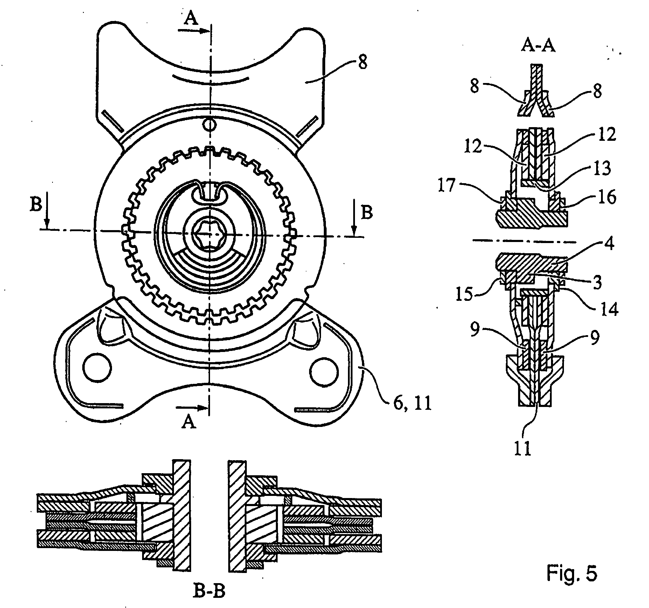

Ein weiteres Ausführungsbeispiel ist in Figur 5 dargestellt. Dieses Ausführungsbeispiel entspricht im wesentlichen dem Ausführungsbeispiel gemäß Figur 4, wobei sich bei dieser Ausführungsform der Antriebsbolzen 4 in zwei Lagerschalen 14, 15 dreht und an jedem Ende zur axialen Sicherung mit Abschlussscheiben 16, 17 verschweißt ist.

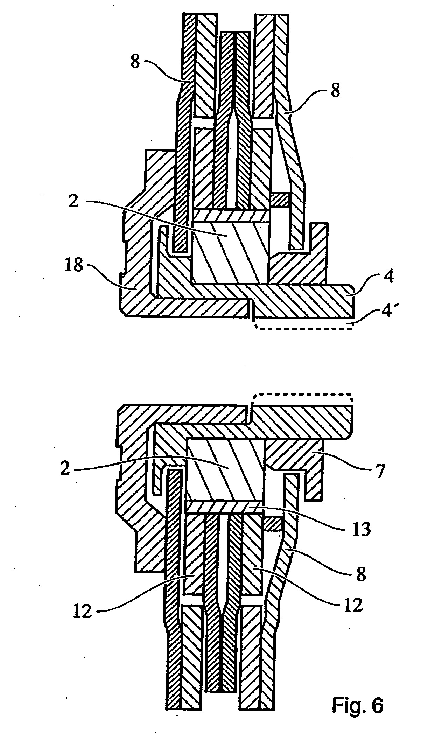

Figur 6 zeigt eine weitere Ausführungsform der erfindungsgemäßen Verstelleinrichtung. In diesem Fall weist die Verstelleinrichtung ein Lager 18 auf, das mit dem Lehnenadapter 8 verbunden ist. An dem Lager 18 ist der Antrieb 4 gelagert. Dieser Antrieb weist an seiner Innenseite Form- und/oder Kraftschlussmittel 4', beispielsweise Zähne, auf die mit entsprechenden Form- und/oder Kraftschlussmitteln eines motorischen Antriebs zusammenwirken. Durch das Lager 18 wird insbesondere die Lebensdauer der Verstelleinrichtung verbessert.

Der Fachmann versteht, dass die Verstelleinrichtung laminatartig aufgebaut sein kann; d.h. mehrere Lehnenadapter 8 und/oder Sitzteiladapter 11 aufweist, die geschichtet angeordnet sind.

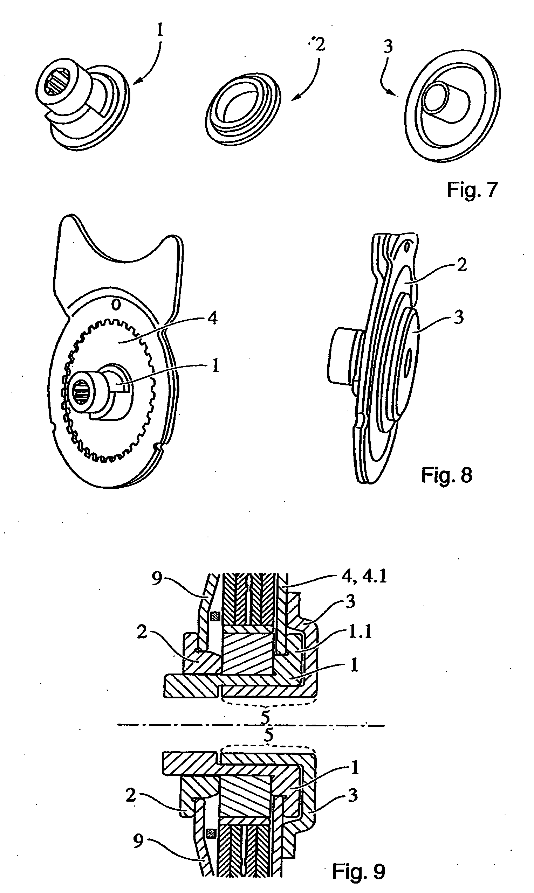

In Figur 7 sind die Hauptkomponenten der für die kraftgetriebene Variante einer erfindungsgemäßen Verstelleinrichtung 10 notwendigen Modifikationen bzw. Bauteile schematisch dargestellt. Bezugszeichen 1 bezeichnet ein Antriebselement zur Anordnung in einer erfindungsgemäßen kraftgetriebenen Verstelleinrichtung. Bezugszeichen 2 bezeichnet eine Führungsbuchse zur Anordnung in einer erfindungsgemäßen kraftgetriebenen Verstelleinrichtung. Bezugszeichen 3 bezeichnet ein Zentralelement zur Anordnung in einer erfindungsgemäßen kraftgetriebenen Verstelleinrichtung.

In Figur 8 ist ein Teil der erfindungsgemäßen Verstelleinrichtung 10 schematisch dargestellt. Neben dem Zentralelement 3 und dem Antriebselement 1 ist ein erstes Beschlagteil 4 gezeigt.

In Figur 9 ist eine Schnittdarstellung durch die erfindungsgemäße Verstelleinrichtung 10 schematisch dargestellt. Hierbei ist ein axial erstreckter (entlang der Drehachse der Verstelleinrichtung 10 verlaufender) Überlappbereich 5 des Zentralelements 3 und des Antriebselements 1 erkennbar. Aus der Schnittdarstellung in Figur 3 ist ersichtlich, dass durch die stoffschlüssige Verbindung (insbesondere eine Schweißung und insbesondere eine Laserschweißung) zwischen dem Zentralelement 3 und dem ersten Beschlagteil 4 bzw. zwischen dem Zentralelement 3 und einem mit dem ersten Beschlagteil 4 drehfest verbundenen Beschlagelement 4.1 ein Kragen 1.1 des Antriebselements 1 und damit gleichzeitig auch das Antriebselement 1 selbst gegen eine axiale Verschiebung entlang der Drehachse der Verstelleinrichtung 10 fixiert wird. Dies entspricht dem ersten Verfahrensschritt des Herstellungsverfahrens der erfindungsgemäßen Verstelleinrichtung 10. Anschließend daran werden die anderen Komponenten bzw. Teile der Verstelleinrichtung 10 montiert, was dem zweiten Verfahrensschritt des Herstellungsverfahrens der erfindungsgemäßen Verstelleinrichtung 10 entspricht. Bevorzugt wird die Führungsbuchse 2 mit dem Antriebselement 1 und/oder mit dem ersten oder zweiten Beschlagteil 4, 9 verbunden bzw. verschweißt, so dass die Verstelleinrichtung 10 ein weiter verbessertes Verhalten gegen Kräfte aufweist, die im Sinne einer axialen Demontage der Verstelleinrichtung 10 wirken.

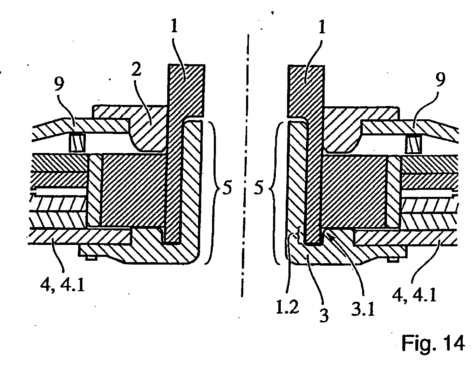

In Figur 14 ist eine Ausführungsvariante zu der in den Figuren 7, 8 und 9 dargestellten erfindungsgemäßen Verstelleinrichtung 10 in Schnittdarstellung durch die erfindungsgemäße Verstelleinrichtung 10 schematisch dargestellt. Hierbei bezeichnen gleiche Bezugszeichen aus vorangehenden Figuren gleiche Komponenten bzw. Teile der Verstelleinrichtung 10. Im Unterschied zu der gemäß Figur 9 dargestellten Ausführungsvariante der erfindungsgemäßen Verstelleinrichtung 10 ist es bei der Ausführungsvariante gemäß der Figur 14 vorgesehen, dass anstelle des in Figur 9 dargestellten Kragens 1.1 des Antriebselements 1 ein axiales Ende 1.2 des Antriebselements 1 in eine im wesentlichen kreisförmige Nut bzw. Ausnehmung 3.1 des Zentralelements 3 hineinragt. Hierdurch ergibt sich in radialer Richtung ein Hinterschnitt des Zentralelements 3 gegenüber dem Antriebselement 1, was zu einer höheren Tragfähigkeit der Verstelleinrichtung 10 gemäß dieser Ausführungsvariante führt und ferner auch - insbesondere wegen einer kleineren und leichten Ausführung des Endes 1.2 des Antriebselements 1 gegenüber der Ausführung des Kragens 1.1 des Antriebselements - zu einer Gewichtsersparnis, zu einer Materialerspamis und zu einer Kostenreduktion führt. Bei der in Figur 14 dargestellten Ausführungsvariante ist es ferner - alternativ oder kumulativ zum Hinterschnitt des Zentralelements 3 gegenüber dem Antriebselement 1 - vorgesehen, dass der Überlappbereich 5 größer bzw. länger vorgesehen ist, so dass gegenüber der Ausbildung des Überlappbereichs 5 gemäß der Figur 9 insbesondere eine Erstreckung des Überlappbereichs 5 in axialer Richtung über den Bereich des Exzentermittels 6 hinaus bei der Ausführungsvariante gemäß der Figur 14 vorgesehen ist.

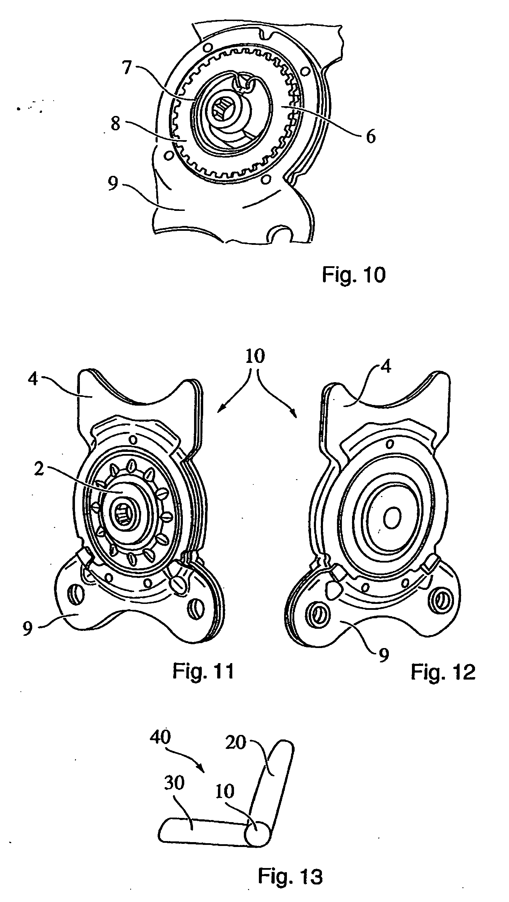

In Figur 10 ist eine perspektivische Darstellung einer teilweise montierten erfindungsgemäßen Verstelleinrichtung schematisch dargestellt. Nachdem die Montage einer der Hälfte der Verstelleinrichtung entsprechenden Unterbaugruppe abgeschlossen ist, wird die Verstelleinrichtung gemäß der in der Druckschrift WO 2006/040303 A2 angegebenen Art und Weise zusammengebaut, nämlich mit Exzentermitteln 6 in Form von beispielsweise Keilen, einer Feder, Getriebeplatten 8 und eines zweiten Beschlagteils 9 sowie einer Führungsbuchse.

In den Figuren 11 und 12 sind zwei perspektivische Ansichten der fertig montierten kraftgetriebenen erfindungsgemäßen Verstelleinrichtung 10 schematisch dargestellt. Hierbei wird die Führungsbuchse 2 auf das Antriebselement und/oder auf das erste Beschlagteil 4 oder das zweite Beschlagteil 9 geschweißt.

Erfindungsgemäß ist es besonders bevorzugt vorgesehen, dass die Verstelleinrichtung 10 an einem Fahrzeugsitz als der Fahrzeugkomponente vorgesehen ist und dass die Verstelleinrichtung 10 für die Neigungsverstellung der Rückenlehne 20 eines außer der Rückenlehne 20 auch ein Sitzteil 30 aufweisenden Fahrzeugsitzes 40 vorgesehen ist. Dies ist schematisch in Figur 13 dargestellt.

### Bezugszeichenliste

- 1: Exzenter, Antriebselement
- 1.1: Kragen
- 1.2: axiales Ende des Antriebselements
- 2: Exzentermittel, Keil, Führungsbuchse
- 3: Mitnehmer, Zentralelement
- 3.1: Ausnehmung / Nut
- 4: Antrieb, Antriebsbolzen, erstes Beschlagteil
- 4': Form- und/oder Kraftschlussmittel
- 4.1: Beschlagelement
- 5: Bolzen (stationär), Überlappungsbereich
- 6: Halteplatte, Exzentermittel, Keile
- 7: Buchse, Feder
- 8: erstes Beschlagteil, Lehnenadapter, Getriebeplatte
- 9: Zahnrad (innenverzahnt), zweites Beschlagteil
- 10: Feder
- 11: zweites Beschlagteil, Sitzteiladapter
- 12: Zahnräder (außenverzahnt)
- 13, 14, 15: Lagerschale
- 16, 17: Abschlussscheibe
- 18: Lager

- E: Exzentrizität
- P: Kontaktpunkt
- r: Außenradius des Antriebsbolzens
- R: Innenradius des Keils

## Patentansprüche

1. Verstelleinrichtung für eine Fahrzeugkomponente, insbesondere für die Rückenlehne eines Fahrzeugsitzes, mit einem ersten Beschlagteil (8) und einem zweiten Beschlagteil (11), wobei die relative Lage der beiden Beschlagteile (8, 11) zueinander mittels eines Exzenters (1) veränderbar ist, der ein Drehmoment von einem Antrieb (4) auf das erste Beschlagteil (8) übertragt, so dass dieses an dem zweiten Beschlagteil (11) abrollt und der Exzenter (1) mindestens ein Exzentermittel (2) umfasst, das von einem Mitnehmer (3), der an dem Antrieb (4) angeformt ist, antreibbar ist, **dadurch gekennzeichnet, dass** der Mitnehmer (3) eine Neutralstellung, in der er von dem Exzentermittel (2) beabstandet ist und eine Antriebsstellung, in der er am Exzentermittel (2) anliegt und diesen antreibt, einnimmt, wobei beim Drehen des Antriebs (4) zwischen diesem und dem Exzentermittel (2) zumindest zeitweise ein Reibschluss erfolgt, bis der Mitnehmer (3) an dem Exzentermittel (2) anliegt und dadurch die Antriebsfunktion übernimmt.

2. Verstelleinrichtung nach Anspruch 1, **dadurch gekennzeichnet, dass** ein Außenradius (r) des Antriebs (4) mit einem Innenradius (R) des Exzentermittels (2) zusammenwirkt.

3. Verstelleinrichtung nach Anspruch 2, **dadurch gekennzeichnet, dass** Reibschluss mitnehmerfern, vorzugsweise bei einer Teilung von 1:1,5 -1:2,5, besonders bevorzugt 1:1,75 - 1:2,25 des Radius (R) erfolgt.

4. Verstelleinrichtung nach einem der voranstehenden Ansprüche, **dadurch gekennzeichnet, dass** sie zwei Exzentermittel (2) aufweist.

5. Verstelleinrichtung nach Anspruch 4, **dadurch gekennzeichnet, dass** zwischen den beiden Exzentermitteln (2) eine Feder (10) wirkt.

6. Verstelleinrichtung nach einem der voranstehenden Ansprüche, **dadurch gekennzeichnet, dass** ein Außenradius des Exzentermittels (2) mit einer Lagerschale (13) zusammenwirkt.

7. Verstelleinrichtung nach einem der voranstehenden Ansprüche, **dadurch gekennzeichnet, dass** der Antrieb (4) ein Antriebsbolzen ist, der mit einer Buchse (7) verbunden ist oder der in Lagerschalen (14, 15) gelagert ist, wobei der Antriebsbolzen an seinen Enden vorzugsweise mit Anschlussscheiben (16, 17) versehen ist.

8. Verstelleinrichtung nach einem der voranstehenden Ansprüche, **dadurch gekennzeichnet, dass** sie laminatartig aufgebaut ist.

9. Kraftfahrzeugsitz aufweisend eine Verstelleinrichtung gemäß einem der voranstehenden Ansprüche.

## Claims

1. Adjustment device for a vehicle component, in particular for the backrest of a vehicle seat, having a first fitting (8) and a second fitting (11), the relative position of the two fittings (8, 11) to one another being able to be changed by means of an eccentric (1) which transmits a torque from a drive (4) to the first fitting (8), so that said first fitting rolls on the second fitting (11) and the eccentric (1) comprises at least one eccentric means (2), which may be driven by a driver (3), which is formed on the drive (4), **characterized in that** the driver (3) assumes a neutral position in which it is spaced apart from the eccentric means (2) and a drive position in which it bears against the eccentric means (2) and drives said means, wherein when rotating the drive (4) between said drive and the eccentric means (2) a frictional connection takes place at least at times until the driver (3) bears against the eccentric means (2) and thereby takes over the drive function.

2. Adjustment device according to Claim 1, **characterized in that** an external radius (r) of the drive (4) cooperates with an internal radius (R) of the eccentric means (2).

3. Adjustment device according to Claim 2, **characterized in that** the frictional connection remote from the driver takes place preferably at a division of 1:1.5 - 1:2.5, particularly preferably 1:1.75 - 1:2.25 of the radius (R).

4. Adjustment device according to one of the preceding claims, **characterized in that** it comprises two eccentric means (2).

5. Adjustment device according to Claim 4, **characterized in that** a spring (10) acts between the two eccentric means (2).

6. Adjustment device according to one of the preceding claims, **characterized in that** an external radius of the eccentric means (2) cooperates with a bearing shell (13).

7. Adjustment device according to one of the preceding claims, **characterized in that** the drive (4) is a drive pin which is connected to a bushing (7) or which is mounted in bearing shells (14, 15), wherein the drive pin is provided at its ends preferably with closure plates (16, 17).

8. Adjustment device according to one of the preceding claims, **characterized in that** it is of laminate-type construction.

9. Motor vehicle seat comprising an adjustment device according to one of the preceding claims.

## Revendications

1. Dispositif de réglage pour un composant de véhicule, en particulier pour le dossier d'un siège de véhicule, comprenant une première partie de ferrure (8) et une deuxième partie de ferrure (11), la position relative des deux parties de ferrure (8, 11) l'une par rapport à l'autre pouvant être modifiée au moyen d'un excentrique (1) qui transfère un couple depuis un entraînement (4) à la première partie de ferrure (8), de telle sorte que celle-ci roule sur la deuxième partie de ferrure (11) et l'excentrique (1) comprenant au moins un moyen d'excentrique (2) qui peut être entraîné par un dispositif d'entraînement (3) qui est formé sur l'entraînement (4), **caractérisé en ce que** le dispositif d'entraînement (3) prend une position neutre dans laquelle il est espacé du moyen d'excentrique (2) et une position d'entraînement dans laquelle il s'applique contre le moyen d'excentrique (2) et entraîne celui-ci, un engagement par friction se produisant au moins temporairement lors de la rotation de l'entraînement (4) entre celui-ci et le moyen d'excentrique (2), jusqu'à ce que l'élément d'entraînement (3) s'applique contre le moyen d'excentrique (2) et reprenne de ce fait la fonction d'entraînement.

2. Dispositif de réglage selon la revendication 1, **caractérisé en ce qu'**un rayon extérieur (r) de l'entraînement (4) coopère avec un rayon intérieur (R) du moyen d'excentrique (2).

3. Dispositif de réglage selon la revendication 2, **caractérisé en ce que** l'engagement par friction s'effectue à distance du moyen d'entraînement, de préférence pour une division de 1:1,5 - 1:2,5, particulièrement préférablement de 1:1,75 - 1:2,25 du rayon (R).

4. Dispositif de réglage selon l'une quelconque des revendications précédentes, **caractérisé en ce qu'**il présente deux moyens d'excentrique (2).

5. Dispositif de réglage selon la revendication 4, **caractérisé en ce qu'**entre les deux moyens d'excentrique (2) agit un ressort (10).

6. Dispositif de réglage selon l'une quelconque des revendications précédentes, **caractérisé en ce qu'**un rayon extérieur du moyen d'excentrique (2) coopère avec une coque de palier (13).

7. Dispositif de réglage selon l'une quelconque des revendications précédentes, **caractérisé en ce que** l'entraînement (4) est un boulon d'entraînement qui est connecté à une douille (7) ou qui est supporté dans des coques de palier (14, 15), le boulon d'entraînement étant pourvu, au niveau de ses extrémités, de préférence de rondelles de raccordement (16, 17).

8. Dispositif de réglage selon l'une quelconque des revendications précédentes, **caractérisé en ce qu'**il est construit sous forme stratifiée.

9. Siège de véhicule automobile présentant un dispositif de réglage selon l'une quelconque des revendications précédentes.
